# EUROPEAN PATENT APPLICATION

(11) **EP 4 345 625 A1**
(43) Date of publication of application: **03.04.2024**
(21) Application number: 22946610.7
(22) Date of filing: 07.12.2022
(51) Int. Cl.: G06F 11/14

(54) **DATA RECOVERY METHOD AND APPARATUS, ELECTRONIC DEVICE, AND STORAGE MEDIUM**

(30) Priority: 14.06.2022 CN 202210673045
(71) Applicant: Rolling Wireless S.À R.L., 2540 Luxembourg (LU)
(72) Inventor: TAO, Qinghuan, Shenzhen, Guangdong 518055 (CN)
(74) Representative: J A Kemp LLP
(86) International application number: PCT/CN2022/137141
(87) International publication number: WO 2023/240944

(57) **Abstract**

Disclosed are a data recovery method and apparatus, an electronic device, and a storage medium. The data recovery method includes: acquiring the name of a target source code file, wherein the target source code file is a source code file corresponding to an exception code when a running exception occurs in a communication module; determining that the exception cause of the running exception of the communication module is a file system exception, automatically performing data recovery and then restarting the communication module if a prefix of the name of the target source code file is the same as a preset prefix, wherein the preset prefix is a filename prefix of a source code file of a file system corresponding to the communication module; and determining that the exception cause of the running exception of the communication module is not a file system exception, and directly restarting the communication module if the prefix of the name of the target source code file is different from the preset prefix.

## Description

### CROSS REFERENCE TO RELATED APPLICATIONS

The present disclosure claims all the rights and interests of a patent application for invention No. 202210673045.X, filed to the CNIPA on June 14, 2022, and entitled "Data Recovery Method and Apparatus, Electronic Device, and Storage Medium", the entire contents of which are incorporated herein by reference.

### FIELD

The present disclosure relates generally to the technical field of communication, and more particularly to a data recovery method and apparatus, an electronic device, and a storage medium.

### BACKGROUND

With the development of intelligence and communication technology, communication modules are used in more and more devices. Taking smart cars and cellular wireless communication technology as examples, with the development of smart cars and cellular wireless communication technology, a cellular wireless communication module has become an essential part of a new smart car or electric car, which enables the new smart car or electric car to access cellular wireless networks, providing richer functions for car owners. As an important part of the automobile electrical system, the reliability design of the cellular wireless communication module is very important. In general, the reliability design should incorporate the function of recovering abnormal data of the product (a device on which the communication module is installed or the communication module itself). That is, when a fatal error occurs in a product, the problem caused by the anomaly of the file system (including the anomaly of the product data stored in the file system) is accurately captured, so as to perform the recovery of the file system and the product data stored in the file system, and finally recover the function of the product.

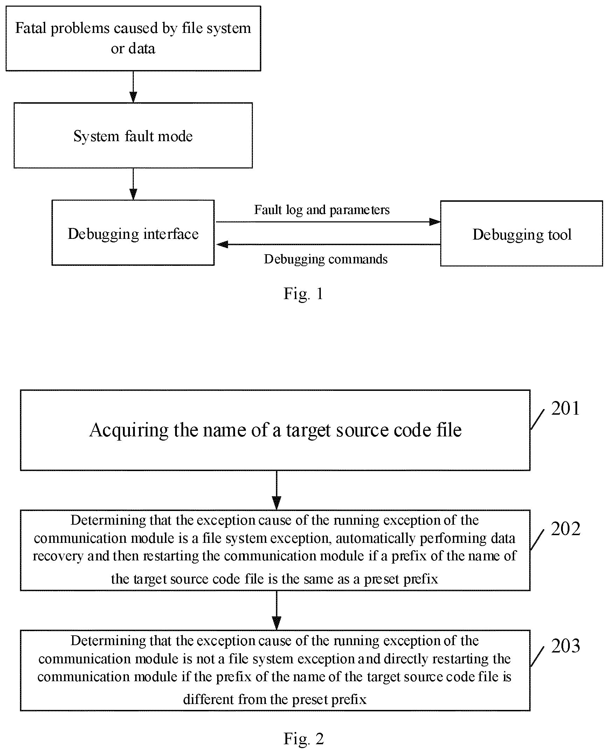

As shown in Fig. 1, in the related art, when a product has fatal problems caused by the file system or data, it always needs research personnel and maintenance personnel who has professional knowledge to interfere. After the product enters the system fault mode, the problems are analyzed and located. It also needs to debug the fault log and parameters for many times using professional a debugging tool through the debugging interface, and then manually recover the product data based on debugging commands (generally the recovery is the recovery of the key data of the product), so as to achieve the purpose of repairing the product.

### SUMMARY

In a first aspect, the present disclosure relates to a data recovery method, including:
acquiring the name of a target source code file, wherein the target source code file is a source code file corresponding to an exception code when a running exception occurs in a communication module;
determining that the exception cause of the running exception of the communication module is a file system exception, automatically performing data recovery and then restarting the communication module if a prefix of the name of the target source code file is the same as a preset prefix, wherein the preset prefix is a filename prefix of a source code file of a file system corresponding to the communication module; and
determining that the exception cause of the running exception of the communication module is not a file system exception and directly restarting the communication module if the prefix of the name of the target source code file is different from the preset prefix.

In some embodiments, acquiring the name of the target source code file includes:
receiving exception information reported by an exception handling module of the communication module, wherein the exception information includes the exception code, the location of the exception code, and the name of the target source code file; and
determining the name of the target source code file based on the exception information.

In some embodiments, the data recovery method further includes:
recording the time at which the running exception of the communication module occurs, and the exception cause of the running exception of the communication module.

In some embodiments, automatically performing data recovery includes:
determining the number of consecutive occurrences of the file system exception among the exception causes according to the time at which the running exception of the communication module occurs, and the exception cause of the running exception of the communication module; and
automatically performing data recovery if the number of consecutive occurrences of the file system exception exceeds a preset number of times.

In some embodiments, automatically performing data recovery includes:
acquiring backup data from a target storage region through a target interface; and
replacing data in the communication module with the backup data.

In some embodiments, the data recovery method further includes:
building the target interface so as to facilitate access to the backup data in the target storage region through the target interface; and
building a file system interface so as to facilitate access to the file system in a file system storage region through the file system interface.

In some embodiments, before acquiring the name of the target source code file, the method further includes:
adding the preset prefix to the name of the source code file corresponding to the file system when writing the source code file corresponding to the file system.

In a second aspect, the present disclosure relates to a data recovery apparatus, including:
an acquisition module, configured to acquire the name of a target source code file, wherein the target source code file is a source code file corresponding to an exception code when a running exception occurs in a communication module; and
a restart module, configured to determine that the exception cause of the running exception of the communication module is a file system exception, automatically perform data recovery and then restart the communication module if a prefix of the name of the target source code file is the same as a preset prefix; wherein the preset prefix is a filename prefix of a source code file of a file system corresponding to the communication module; wherein
the restart module is further configured to determine that the exception cause of the running exception of the communication module is not a file system exception and directly restart the communication module if the prefix of the name of the target source code file is different from the preset prefix.

In a third aspect, the present disclosure relates to an electronic device, including a processor, a communication interface, a memory, and a communication bus, wherein the processor, the communication interface and the memory communicate with one another through the communication bus; wherein
the memory is configured to store a computer program;
the processor is configured to implement the data recovery method according to the present disclosure when executing the program stored in the memory.

In a fourth aspect, the present disclosure relates to a computer-readable storage medium, storing a computer program, wherein the computer program, when executed by a processor, implements the data recovery method according to the present disclosure.

In some embodiments, the data recovery method of the present disclosure acquires a target source code file corresponding to an exception code when a running exception occurs in a communication module, quickly determines the exception cause of the running exception of the communication module based on the name of the target source code file and the preset prefix of the source code file corresponding to the file system, and automatically performs data recovery after quickly determining that the exception cause is a file system exception, thereby quickly performing data recovery and improving the efficiency of data recovery.

### BRIEF DESCRIPTION OF THE DRAWINGS

The accompanying drawings, which are incorporated in and constitute a part of this specification, illustrate embodiments consistent with the present disclosure and together with the description, serve to explain the principles of the disclosure.

In order to illustrate the technical solutions of the embodiments of the present disclosure more clearly, the accompanying drawings required to be used by the embodiments will be simply introduced below, and it is obvious that for those of ordinary skill in the art, other drawings can also be obtained according to these drawings without paying creative labor.
FIG 1 is a schematic diagram of a flow of manual data recovery in the related art according to an embodiment of the present disclosure;
FIG 2 is a schematic diagram of a data recovery method according to an embodiment of the present disclosure;
FIG 3 is a schematic diagram of a data recovery flow according to an embodiment of the present disclosure;
FIG 4 is a schematic diagram of a data recovery apparatus according to an embodiment of the present disclosure; and
FIG 5 is a structural schematic diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below in conjunction with the accompanying drawings in the embodiments of the present disclosure, and it is obvious that the described embodiments are part of the embodiments of the present disclosure, rather than all of the embodiments. All other embodiments obtained by those of ordinary skill in the art based on the embodiments in the present disclosure without making inventive labor belong to the scope of protection of the present disclosure.

In order to solve the problem in the related art that when a file system and data in the file system cause fatal problems, it takes a long time for data recovery, so that the efficiency of data recovery is low, the embodiment of the present disclosure provides a data recovery method applied to any device, the device can be a communication module or a device on which the communication module is installed, or other devices that can communicate with the communication module or the device on which the communication module is installed. As shown in FIG 2, the data recovery method includes steps 201-203:
Step 201: acquiring the name of a target source code file;
Step 202: determining that the exception cause of the running exception of the communication module is a file system exception, automatically performing data recovery and then restarting the communication module if a prefix of the name of the target source code file is the same as a preset prefix; and
Step 203: determining that the exception cause of the running exception of the communication module is not a file system exception and directly restarting the communication module if the prefix of the name of the target source code file is different from the preset prefix.

In some embodiments, the target source code file is a source code file corresponding to an exception code when a running exception occurs in the communication module.

In some embodiments, in the process of acquiring the name of the target source code file, exception information reported by an exception handling module of the communication module is received first, and then the name of the target source code file is determined based on the exception information.

In some embodiments, the exception information includes the exception code, the location of the exception code, and the name of the target source code file. Of course, the exception information reported by the exception handling module can also contain other desired content.

The name of the target source code file is acquired based on the exception information, so that the exception cause of the running exception of the communication module can be quickly determined based on the name of the target source code file, accordingly, the time taken to locate the exception cause is shortened, and the efficiency of data recovery is improved. In addition, based on the content contained in the exception information reported by the exception handling module, the exception code can be located, so that the relevant personnel can know the running status of the communication module based on the exception code, the location of the exception code and other items in the exception information, and improve the relevant source code file.

The exception handling module of the communication module performs scanning to obtain the exception code, the location of the exception code, and the name of the target source code file upon detecting that a running exception occurs in the communication module. Subsequently, the exception handling module generates exception information based on the information items obtained by scanning, and reports the exception information.

In some embodiments, in the software part or firmware part, the source code for detecting and processing the running exception of the communication module is added, the source code is then compiled and linked by a compiler and a linker to obtain an executable code, including a software code or firmware code, and then the executable code and information such as the source code corresponding to the executable code are packaged into corresponding software or firmware, so as to obtain the above exception handling module. Wherein, the functions of the compiler and the linker used in this process are standard functions of the compiler and the linker, requiring no additional development. Of course, other source codes also need to be processed similarly or identically by the compiler and linker so that the communication module can operate normally.

In some embodiments, the preset prefix is a filename prefix of a source code file of a file system corresponding to the communication module.

In some embodiments, before the name of the target source code file is acquired and when the source code file corresponding to the file system is written, a preset prefix is added to the name of the source code file corresponding to the file system. In this way, all running exceptions of the communication module caused by file system exception can be identified based on the preset prefix.

In some embodiments, before the name of the target source code file is acquired and when the source code about the file system software package is written, a fixed and unified filename prefix, i.e., a preset prefix, is used, in which case the format of the source code file name can be, for example, xxx_aaa.b. Wherein xxx_ denotes the preset prefix, aaa denotes an unfixed file name determined according to actual requirements, and .b denotes a file extension determined according to actual requirements.

In some embodiments, the preset prefix is set to, for example, fs_, in c language as an example. At this point, the name of the source code file for file system initialisation can be set to fs_init.c; the name of the source code file used to build the application interface outside the file system can be set to fs_user.c; the name of the source code file of a driver layer of the file system can be set to fs_driver.c; and so on, fs_ is added as a prefix to the front of the names of all the source code files of the file system.

In some embodiments, after the exception cause of the running exception of the communication module is determined, information such as the time at which the running exception of the communication module occurs and the exception cause of the running exception of the communication module is recorded. In this way, the data of the communication module can be automatically recovered based on the information such as the exception cause and exception time of the running exception, or an operator can know the running status of the communication module and make corresponding improvements based on the running status of the communication module.

In some embodiments, data recovery can only be performed automatically when the following conditions are met: the number of consecutive occurrences of the file system exception among the exception causes is determined based on the occurrence time of the running exception of the communication module and the exception cause of the running exception of the communication module, and then data recovery is automatically performed if the number of consecutive occurrences of the file system exception exceeds a preset number of times.

When it is determined that the exception cause of a preset number of consecutive occurrences of exception of the communication module is a file system exception based on the time at which the running exception of the communication module occurs and the exception cause of the running exception of the communication module, data recovery is automatically performed. The preset number of times can be fixed or determined according to actual operating conditions.

In some embodiments, the preset number of times can be 3.

After it is detected for a preset number of consecutive times that the exception cause of the exception of the communication module is a file system exception, the reliability of the determined exception cause can be ensured, so that data recovery can be performed accurately, and the efficiency of data recovery can be ensured.

In some embodiments, data recovery is automatically performed if the exception cause of the exception of the communication module is detected to be a file system exception for a preset number of consecutive times in a preset period of time. Wherein, the preset period of time can be a fixed value or a value determined according to actual operating conditions. In this manner, the reliability of the determined exception cause of the running exception of the communication module can be further ensured, data recovery is accurately performed, and the efficiency of data recovery is ensured.

In some embodiments, when data recovery is automatically performed, backup data is acquired from a target storage region through a target interface and then data in the communication module is replaced with the backup data.

In some embodiments, the backup data can be a backup of the file system of the communication module and data in the file system before the communication module leaves the factory, or a backup of the file system and data in the file system that is periodically updated according to actual requirements. The updating can be performed upon receipt of a user instruction or performed automatically.

In some embodiments, taking the preset number of times being 3 as an example, after it is determined that the exception cause of the running exception of the communication module is a file system exception for three consecutive times, the software or firmware automatically uses the backup data to recover the file system of the communication module and the data in the file system.

In some embodiments, the backup data is acquired from the target storage region through the target interface. Thus, when codes are written, it is necessary to build a target interface so as to access the backup data in the target storage region through the target interface, and of course, it is necessary to build a file system interface so as to access the file system in the file system storage region through the file system interface, including the data in the file system.

The target interface for accessing the backup data and the interface for accessing the file system are different and are independent of each other, and the target storage region and the file system storage region are independent of each other. In this way, access to the target storage region can be achieved, and the access to the target storage region is independent of or does not rely on the code corresponding to the file system.

In some embodiments, the file system and the backup data are stored in different storage partitions.

After data recovery is automatically performed, the communication module is restarted so that the data recovery can take effect and the communication module can run normally.

After determining that the cause of the running exception of the communication module is not a file system exception, the communication module can be reset by restarting the communication module so that the communication module can recover from the running exception condition and run normally.

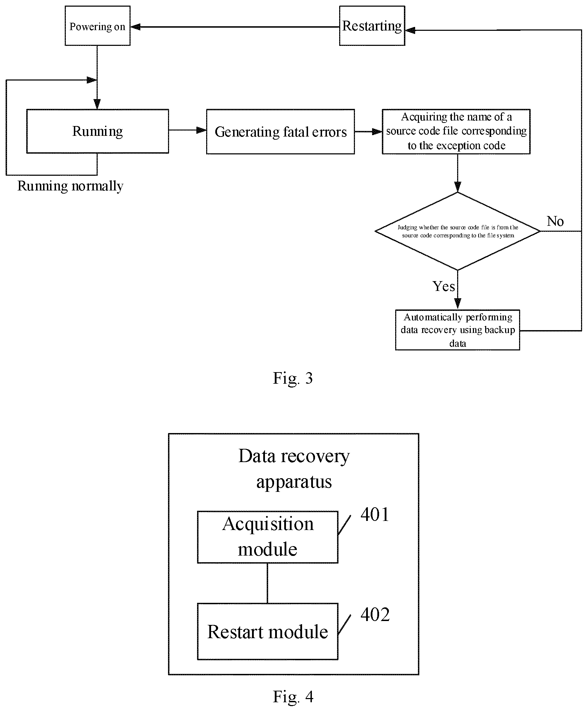

An embodiment of the present disclosure provides a schematic diagram of a data recovery flow, as shown in FIG. 3. The communication module is powered on and runs, if a fatal error such as a crash is generated, an exception code is detected, and the name of a source code file corresponding to the exception code is acquired; the operation is not performed if the communication module runs normally. Subsequently, it is judged whether the source code file is from the source code corresponding to the file system based on the name of the source code file corresponding to the exception code. If so, data recovery is automatically performed using the backup data, and the communication module is restarted; if not, the communication module is directly restarted.

In the related art, after the file system exception causes the product to fail to operate normally, the product problems are usually analysed and repaired by relevant after-sales service personnel with professional knowledge through the method of multiple times of debugging. At this point, the relevant after-sales service personnel need to manually distinguish the exception causes of the running exception of the communication module, and use special debugging tools to recover the data through debugging commands, and finally repair the product. However, this process takes a long time. In the present disclosure, whether the exception cause of the running exception of the communication module is a file system exception can be quickly determined based on the name of the target source code file and the preset prefix of the source code file corresponding to the file system, and the data recovery is automatically performed when the exception cause is the file system exception, thus improving the efficiency of data recovery on the basis of quickly determining the exception cause.

In addition, the process of repairing products in the related art needs to consume more manpower, which may cause higher after-sales costs and bring additional use costs to users. Whereas in the present disclosure, when a fatal error occurs in a product due to a file system exception, the file system, including data stored in the file system, can be automatically recovered to recover the functions of the product, thereby reducing the maintenance and after-sales cost of the product, improving the user experience and improving the competitiveness of the product.

As shown in FIG 4, an embodiment of the present disclosure provides a data recovery apparatus, including an acquisition module 401 and a restart module 402, wherein
the acquisition module 401 is configured to acquire the name of a target source code file, wherein the target source code file is a source code file corresponding to an exception code when a running exception occurs in a communication module; and
the restart module 402 is configured to determine that the exception cause of the running exception of the communication module is a file system exception, automatically perform data recovery and then restart the communication module if a prefix of the name of the target source code file is the same as a preset prefix; wherein the preset prefix is a filename prefix of a source code file of a file system corresponding to the communication module;
the restart module 402 is further configured to determine that the exception cause of the running exception of the communication module is not a file system exception and directly restart the communication module if the prefix of the name of the target source code file is different from the preset prefix.

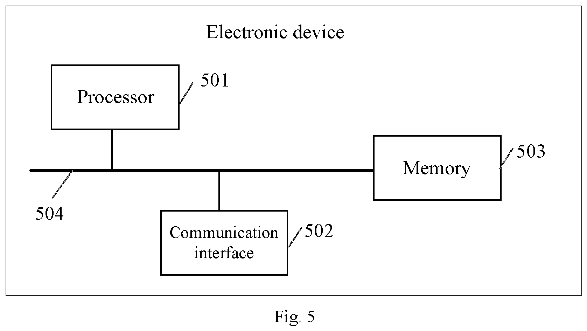

As shown in FIG 5, an embodiment of the present disclosure provides an electronic device, which can be any device in the above-mentioned system, and includes a processor 501, a communication interface 502, a memory 503 and a communication bus 504, wherein the processor 501, the communication interface 502 and the memory 503 communicate with one another through the communication bus 504,
the memory 503 is configured to store a computer program;
the processor 501 is configured to implement the data recovery method of the present disclosure when executing the program stored in the memory 503.

The electronic device according to an embodiment of the present disclosure can be a module capable of implementing a communication function or a terminal device including the module, and the terminal device can be a mobile terminal or a smart terminal. The mobile terminal can be at least one of a mobile phone, a tablet computer, a laptop computer, and the like; the smart terminal can be a terminal including a wireless communication module such as a smart car, a smart watch, a shared bicycle, and a smart locker; the module can be a wireless communication module, such as any one of a 2G communication module, a 3G communication module, a 4G communication module, a 5G communication module and an NB-IOT communication module.

An embodiment of the present disclosure further provides a computer-readable storage medium, storing a computer program, wherein the computer program, when executed by a processor, implements the data recovery method of the present disclosure.

It should be noted that in this paper, relational terms such as "first" and "second" are only used to distinguish one entity or operation from another entity or operation, and do not necessarily require or imply that there is any such actual relationship or order between these entities or operations. Moreover, the terms "including", "include" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including a" does not exclude the existence of other identical elements in the process, method, article or device including the element.

The foregoing are only specific embodiments of the present disclosure, enabling those skilled in the art to understand or implement the present disclosure. Various modifications made to these embodiments will be readily apparent to those skilled in the art, and the generic principles defined herein can be implemented in other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A data recovery method, comprising:
acquiring a name of a target source code file, wherein the target source code file is a source code file of an abnormal code when a running anomaly occurs in a communication module;
determining that the cause for the running anomaly of the communication module is a file system anomaly automatically performing data recovery and then restarting the communication module, if a prefix of the name of the target source code file is the same as a preset prefix; wherein the preset prefix is a filename prefix of a source code file of a file system of the communication module; and
determining that the cause of the running anomaly of the communication module is not a file system anomaly and directly restarting the communication module , if the prefix of the name of the target source code file is different from the preset prefix.

2. The data recovery method according to claim 1, wherein acquiring the name of the target source code file comprises:
receiving anomaly information reported by an anomaly handling module of the communication module, wherein the anomaly information comprises the abnormal code, a location of the abnormal code, and the name of the target source code file; and
determining the name of the target source code file based on the anomaly information.

3. The data recovery method according to claim 1 or 2, further comprising:
recording a time at which the running anomaly of the communication module occurs and the cause of the running anomaly of the communication module.

4. The data recovery method according to any one of claims 1 to 3, wherein automatically performing data recovery comprises:
determining the number of consecutive occurrences of the file system anomaly based on the time at which the running anomaly of the communication module occurs and the cause of the running anomaly of the communication module; and
automatically performing data recovery if the number of consecutive occurrences of the file system anomaly exceeds a preset number of times.

5. The data recovery method according to any one of claims 1 to 4, wherein automatically performing data recovery comprises:
acquiring backup data from a target storage region through a target interface; and
replacing data in the communication module with the backup data.

6. The data recovery method according to any one of claims 1 to 5, further comprising:
building the target interface , so as to access to the backup data in the target storage region through the target interface; and
building a file system interface, so as to access to the file system in a file system storage region through the file system interface.

7. The data recovery method according to any one of claims 1 to 6, before acquiring the name of the target source code file, the method further comprises:
adding the preset prefix to the name of the source code file of the file system when writing the source code file of the file system.

8. A data recovery apparatus, comprising:
an acquisition module, configured to acquire a name of a target source code file, wherein the target source code file is a source code file corresponding to an exception code when a running exception occurs in a communication module; and
a restart module, configured to determine that an exception cause of the running exception of the communication module is a file system exception, automatically perform data recovery and then restart the communication module if a prefix of the name of the target source code file is the same as a preset prefix; wherein the preset prefix is a filename prefix of a source code file of a file system corresponding to the communication module; wherein
the restart module is further configured to determine that the exception cause of the running exception of the communication module is not a file system exception and directly restart the communication module if the prefix of the name of the target source code file is different from the preset prefix.

9. An electronic device, comprising a processor, a communication interface, a memory, and a communication bus, wherein the processor, the communication interface and the memory communicate with one another through the communication bus; wherein
the memory is configured to store a computer program;
the processor is configured to implement the data recovery method according to any one of claims 1 to 7 when executing the program stored in the memory.

10. A computer-readable storage medium, storing a computer program, wherein the computer program, when executed by a processor, implements the data recovery method according to any one of claims 1 to 7.
